Europäisches Patentamt

European Patent Office

Office européen des brevets

(19)

(11) Publication number: **0 093 228**
A2

(12) # EUROPEAN PATENT APPLICATION

(21) Application number: **83100915.4**

(22) Date of filing: **01.02.83**

(51) Int. Cl.³: **G 11 B 27/02**

(30) Priority: **29.04.82 US 373069**

(43) Date of publication of application:
**09.11.83 Bulletin 83/45**

(84) Designated Contracting States:
**DE FR GB**

(71) Applicant: International Business Machines
Corporation
Old Orchard Road
Armonk, N.Y. 10504(US)

(72) Inventor: Ghosh, Sakti Pada
1381 Echo Valley Drive
San Jose California 95120(US)

(74) Representative: Lancaster, James Donald
IBM United Kingdom Patent Operations Hursley Park
Winchester Hants S021 2JN(GB)

(54) Video disk editing method and system.

(57) Video disk editing system in which a microprocessor enables video frame sequences reproduced optically from the disk to be replaced by access to magnetically recorded video frames coresident on the same disk.

EP 0 093 228 A2

VIDEO DISK EDITING METHOD AND SYSTEM

Technical Field

This invention relates to video recording and playback systems, and more particularly, to modification of playback frame sequences.

Background

Iseminger, et al, "Hybrid Storage Disks", IBM Technical Disclosure Bulletin, vol. 23, p. 554, July 1980, described an optical disk for permanently storing instruction sequences for accessing and operating upon data recorded on peripheral magnetic tracks.  In Strategic Business Services, "Impact of Optical Memories (Video Disks) on the Computer and Image Processing Industries", published May 1980 at pp. IV62-63 reported that one James A.K. Edlin in an alleged copending U.S. patent application disclosed and claimed a method for the link listing and editing of frame tracks by pointers to linkages in an erasable magnetic track recorded on the same optical disk.  That is, a selected frame sequence could be skipped by address modification of the frame playback accessing mechanism.  This was implemented by insertion of a pointer in the end of track space preceding the frame sequences to be avoided. This pointer when read by a microprocessor would reference a magnetic track record location on the same disk.  The magnetic track address would contain the number of next video frame to be used.

The Invention

The technical problem solved by this invention is that of electronically erasing and altering video disk displays.  The related editing of video frame sequences accrues by accessing prerecorded magnetic data stored on the same disk.  This data controls access either to video frames or to stored program control sequences and/or data patches.  Advantageously, the magnetically stored data patches may substitute for displayable frame information.

The inventive method bases its control modality on the match/ mismatch condition between optical frame numbers and the number provided by an executing process which may substitute coresident magnetically stored data.  More particularly, the method steps include magnetically recording access and update information on a region separated from the optically stored data on the same disk; accessing predetermined optical and magnetic information respectively, and comparing the optical and magnetically recorded frame numbers; and applying to a video display head either optically stored data if the frame numbers mismatch or magnetic data if the numbers match.

## Brief Description of the Drawings

FIG. 1 depicts an optical disk with a magnetically writable track thereon.

FIG. 2 shows system logic for implementing the method of the invention.

FIG. 3 sets out an optical disk playback system for video reading.

FIG. 4 shows attachment logic for reading and writing on the magnetic track portion of the optical disk.

FIG. 5 shows a PL/1 source code representation of the method.

## Description of the Best Mode and Industrial Applicability

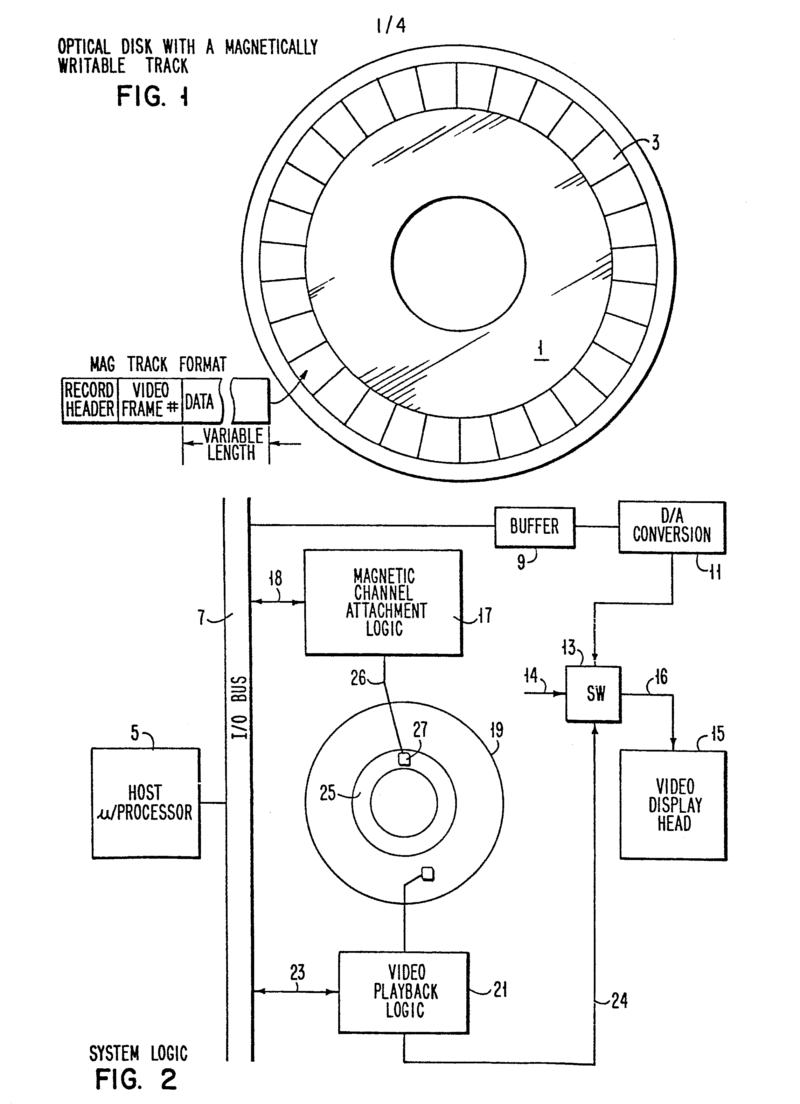

Referring now to FIG. 1, there is shown optical disk 1 with a magnetically writable track 3 thereon.  The disk typically is of the trilayer optical disk type with a 50A (angstrom) dielectric and a 600A aluminum reflector creating an optical cavity.  Preferably, the disk

**0093228**

should be recorded upon using constant angular recording techniques.  A
delay modulation code may be used to translate the deflection of any
laser into the zero or one binary bit system.  This would encode the
data by the location of the transition of the signal within the bit
boundaries as determined by a clock synchronization pulse.  If the
transition occurs at the bit boundary, one is encoded and if the
transition occurs at the center, a zero has been encoded.  Typically a
disk is formatted to record up to 54,000 frames of 525 lines per frame
according to the NTSC convention.  This maximum is reduced by the
recording surface given over to one or more coresident magnetic disk
tracks.  A typical disk and player such as DISCOVISION PR7820 rotates
the disk at 1800 r.p.m., scans 30 frames per second and has a 30 minute
playback time.

A video disk with a magnetic recording track thereon may be formed
by spin coating ferrite particles within a binder upon preselected
exposed portions of the optical disk acting as a substrate according to
the well- known techniques espoused by Flores, et al, USP 3,058,844,
and/or Blum, et al, USP 3,198,657.  These techniques have been employed
in industry to produce commercial grade recording and playback layers
upon various optically permeable substrate materials.

Referring now to FIG. 2, there is shown a system apparatus for
practicing the method according to the invention.  This system consists
of a host processor 5 such as an Intel 8086 or functional equivalent
with a programmable I/O bus 7 to which are appended a magnetic channel
attachment logic 17 over path 18 and a video playback logic 21 over path
23.  The bus is also coupled to a transfer path including buffer 9 and
digital to analog conversion element 11.  A switch 13 may be program set
by a process executing in host 5 to electrically couple switch 13 either
to the output of element 11 or to the output of playback logic 21 over
path 24.  The switch so connected will provide a signal path through to
the video display head 15.

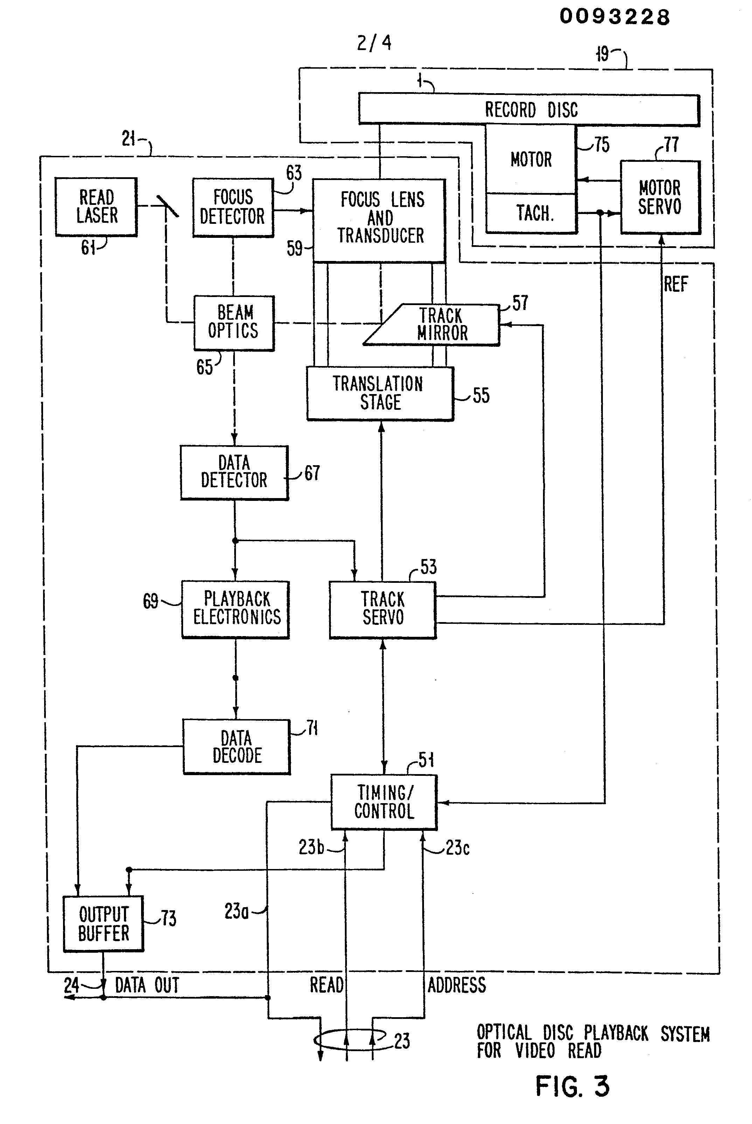

An optical disk 19 with a magnetic track 25 thereupon is rotatably mounted in relation to the magnetic attachment logic 17 and optical playback logic 21. A read/write head 27 for altering data on magnetic track 25 is coupled to attachment logic 17 over path 26. The video playback head coupling logic 21 may assume one of several forms such as a diamond and metal stylus riding on the surface of the disk in a capacitance optical electronic disk system or it may be optically reflective and consisting of a photometric detector responsive to a laser beam modulated by a varying reflective layer within the disk. In this regard, reference may be made to IEEE Spectrum, March 1982, pp. 38-42. Such an optically reflective playback system is shown in FIG. 3. All of the hardware elements are known commercial types. For purposes of completeness, the magnetic attachment logic and the optical disk playback system will be set out. After this, a detailed description and analysis of the method will be made.

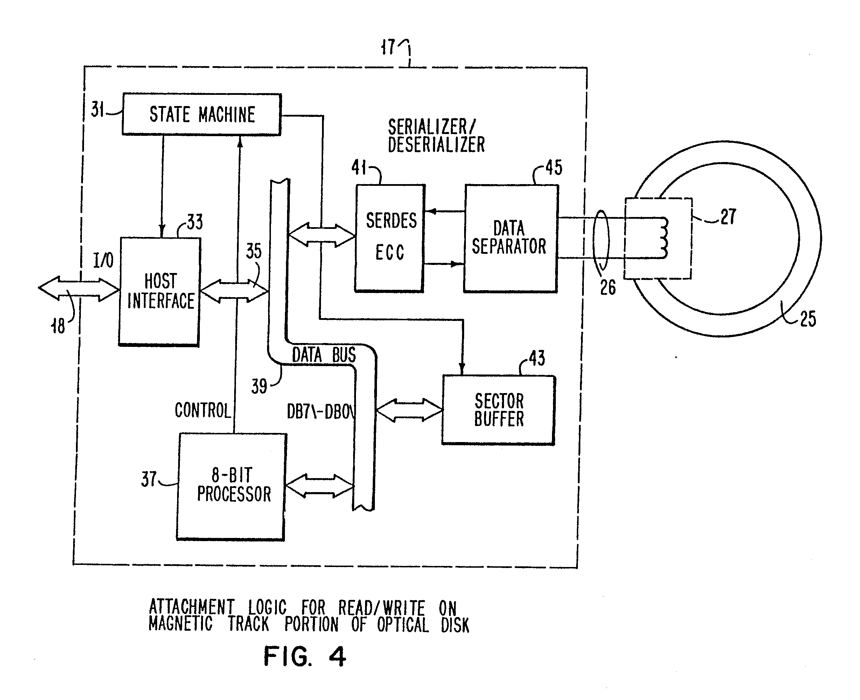

Referring now to FIG. 4, there is shown an attachment logic for executing read and write operations on the magnetic track portion of the optical disk. The optical disk itself is situated on a servo driven motor and rotated at a constant r.p.m. The recording characteristics are controlled as a function of the radial position of the magnetic track and the bits per inch recording density. The attachment logic 17 connects a DASD to the host processor 5 by way of path 18 to I/O bus 7. It preferably may be of a byte wide DC interlocked interface. The magnetic read/write head 27 is mounted in a Winchester type magnetic transducer assembly as described in Warner, USP 3,823,416 issuing 9 July 74. Commands are dispensed by host 5 to the logic 17 in six byte blocks while status is sensed from the logic using a programmed I/O protocol. The movement of data may utilize a DMA protocol over the same byte wide interface.

Within logic 17 in FIG. 4, data is passed using an internal data bus 39 to which the major attachment logic processing elements are coupled. Control is shared by an attachment logic microprocessor 37 and finite state machine 31 which tracks status, availability, and interprets the host 5 supplied commands. A SEEK command is followed by a READ/WRITE command resulting in moving data over a path including the data bus 39, a sector buffer 43 (512 bytes), a serializer/deserializer 41, a data separator 45, to the read/write head 27 over path 26. Data moves in the opposite direction when executing a READ command.

Element 41 serializes bytes in the WRITE direction and bit accumulates bytes in the READ direction. Also, the attachment logic clocking is local and must be synchronized with an index point on the constant 1800 r.p.m. magnetic disk track. The clocking is added to the data stream prior to disk WRITE. Said data is converted from NRZ to mfm. Further, the clocking is removed in transforming mfm to NRZ in disk READ. Both the conversion and clock modulating are performed by data separator 45.

Accessing of the disk by arm 26/head 27 may be by way of an open loop stepping motor counting radial positions from a reference where two or more magnetic tracks on the optical disk are involved. Preferably, head 27 should remain in a fixed position with respect to each magnetic track.

Architecturally, host 5 polls the logic 17 using a circularly driven task dispatcher, the command set preferably should provide the usual READ and WRITE. The use of a DC interlocked tag out/in interface between attachment logic 17 and the host 5 is described by Beausoleil, et al, USP 3,336,582, issued 15 Aug 67 and Beausoleil, et al, USP 3,582,906, issued 1 Jun 71.

Referring now to FIG. 3, there is shown a typical optical disk playback system according to the prior art. Such a system has a record disk 1 mounted on a rotating motor driven spindle 75. A typical 1800 r.p.m. is maintained constant by way of a motor servo 77 in well-known coupling relationship with the motor 75 and a tachometer. A laser beam is directed into the disk track by way of read laser 61, beam optics 65, track mirror 57, and focus lens and transducer 59. A modulated beam is reflected back onto photosensitive elements in data detector 67 where it is converted into electrical signals which are subsequently amplified in playback electronics 69. The reflected path for the modulated beam includes lens 59, mirror 57, and beam optics 65. The servo 77 includes a spindle servo circuit (not shown) which maintains constant disk speed rotation, a focus servo which keeps the laser beam focused exactly on the disk track, a tracking servo 53 which ensures that the laser beam continues to trace the same track. Other elements not shown include a carriage servo which maintains a constant carriage shift rate, and a video time base controller which compensates for error in the time base.

Normally, a signal from data detector 67 is applied to a video demodulator (not shown). Conventionally, the demodulated signal is tapped and applied to a data and clock recovery circuit. This circuit recovers frame number data recorded during the vertical blanking interval of the video signal on the track. Such a recovery path would include detector 67, track servo 53, and timing and control logic 51. The recovered frame numbers are passed to the host processor 5 over path 23A. Relatedly, READ commands may be applied to the playback system at a designated frame address over paths 23B, 23C to timing and control logic 51.

The magnetic and video data processing paths have not been described in engineering detail since both are well appreciated in the prior art. For example, the attachment logic is commercially available from Microprocessor Systems, Inc., Model Xebec ST506 in Santa Clara, California, while the video playback logic model PR7820 may be obtained from MCA DISCOVISION in Torrence, California.

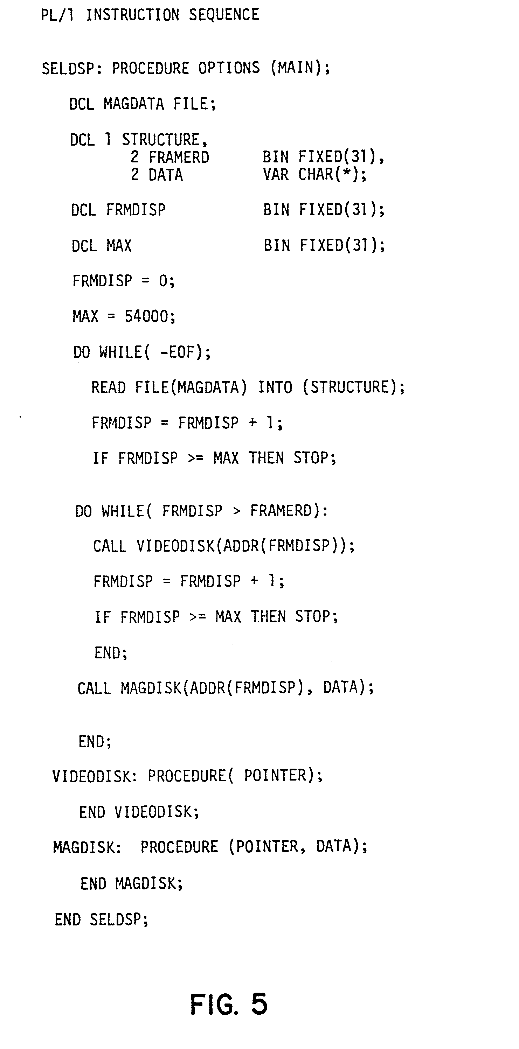

Referring now to FIG. 5, taken together with FIG. 2, process steps expressed in PL/1 programming language are set out for reading records from the magnetic disk track and interpreting the information therefrom. This is for the purpose of instructing the video disk whether or not to display the current video frame from the disk or substitute magnetic disk information therefor.    Host 5 executes the PL/1 object code for
the practice of the inventive method.

Parenthetically, PL/1 is a free format language with block
structure.   In PL/1, an executable process consists of a set of external
procedures, each of which contains a single procedure block within which
other blocks may be nested.  Relatedly, explicit declarations of
variables are specified by means of DECLARE statements (DCL).   These may
appear at any point in the block.  The DECLARE statement also defines
its scope.  Procedure declarations are delimited by procedure and end
statements and may be nested to an arbitrary depth.  Unlike other high
level languages such as PASCAL, there are no reserved words in PL/1.
Further details may be found in Joan K. Hughes, "PL/1 Programming", John
Wiley ' Sons, 1973, LC-QA76.73.P25H83.  Also, review should be made of
the IBM version of the PL/1 language defined in IBM publication
GY33-6003-2, "PL/1 Language Specification", IBM, June 1970.

When the procedure is invoked, a magnetic data file is declared
(MAGDATA).  Each record in this file contains a frame number and data
needed to generate a video picture from digitized data.  Last reload on
the file is the maximum frame number of the video disk.  The next
declaration (STRUCTURE) defines the attributes for each record.  The
attribute (FRAMERD) is of 31 bits in length and defines a frame number
followed by a variable length data field containing digital picture
data.  The last two declarations, FRMDISP and MAX, respectively define
two 31 bit numbers for the frame to be displayed and the maximum frame
on the video disk.

Next, the process becomes initialized by setting the display frame
to zero and setting the maximum number of video frames to its 54K
capacity.  After this, processing involves a pair of nested DO WHILE
loops in which the outer loop involves reading a record into the host
incrementing the frame number as a running variable and displaying from
the magnetic disk.  The inner loop involves reading the frame number to
be displayed from the video disk by a CALL statement incrementing the frame number as a running variable. This inner loop is executed as long as the frame number is less than the frame number parameter supplied to host 5 by the recorded magnetic data. Upon FRMDISP=FRAMERD, then a CALL is made to the magnetic disk at the address defined by FRMDISP and a display is made from a magnetic data. The CALL to the file labeled MAGDISK is an assembly language procedure which uses data on the magnetic track to generate a video picture for display on the video display head. It uses the POINTER to keep the video frames in synchronization. At the end of reading magnetic data, the outer loop will again read another record from the magnetic track into the host and increment the FRMDISP. The nested looping behavior continues until the running variable FRMDISP exceeds MAX. Note the video disk procedure CALL refers to any standard subroutine which uses the pointer to pick up the frame number and send it to the video read head in order to display the picture on the monitor. This too is an assembly program. For both the procedure CALLs VIDEODISK and MAGDISK, the language sequences are omitted.

In terms of the logic of FIG. 2, when a video frame number continuously supplied to processor 5 over path 23 and bus 7 matches the previously stored frame number acquired from the mag track over paths including logic 17,18 and bus 7, then data associatedly read from the mag track is sent from processor 5, over bus 7, through buffer 9, and d/a converter 11 through switch 13 to video display head 15.

It will be further understood by those skilled in this art that various changes in form and details may be made therein without departing from the spirit and scope of the invention. For example, the invention is optimally operable with a reduced number of optical tracks. This number is an empirical function of the beam defocussing angle of deflection of the laser beam with respect to the optical tracks and the need to maintain a synchronized non-interfering relationship between the magnetic and optical track accessing mechanisms.

**0093228**

## CLAIMS

1.  A method for accessing and patching data optically stored on numbered video disk frames comprising the steps of:

    magnetically recording access and update information in a region separated from optically stored data on the same disk;

    accessing predetermined optical and magnetic tracks respectively and comparing the optical and magnetically recorded frame numbers; and

    applying to a video display head either optically stored data if the frame numbers mismatch or magnetically stored data if the numbers match.

2.  A method according to claim 1, wherein the accessing step includes the step of ascertaining whether the prerecorded magnetic data is a command to either access another optically stored or magnetically recorded data track location on the same disk.

3.  A method for forming a composite video image in an interactive data base system formed from a keyboard, a video display, a disk and disk accessing arrangement, and an intercoupling microprocessor, said disk storing numbered optical data frames and having magnetically recorded tracks in a region separate from the optically stored data, said method characterized by the machine implementable steps of:

    responsive to entry of selected keyboard control and text characters, amending a video display image by accessing prerecorded tracks of magnetically stored data, and obtaining and displaying either optically stored data if there exists a mismatch between the optically stored and magnetically recorded frame numbers, or displaying magnetically recorded data if the numbers match.

4.  A method for electronically erasing and altering video disk displays by editing video frame sequences characterized by the method steps of:

    accessing prerecorded magnetic data stored on the same disk;

comparing current frame number displays with a magnetically accessed number; and

applying to a video display head either optically stored data if the frame numbers mismatch or magnetic data if the numbers match.

5. A video disk system comprising means for accessing video frames stored optically on a video disk, means for accessing video frames stored magnetically on the same disk, and means for generating an output video signal in which at least one accessed optically stored video frame is substituted by a predetermined accessed magnetically stored video frame.

6. A system as claimed in claim 5 including means for magnetically recording a said magnetically stored video frame on a said disk.

7. A system as claimed in claim 6 in which said magnetically stored video frame is stored in digitized form.

8. A system as claimed in any of claims 5 to 7 including a microprocessor for controlling said substitution.

OPTICAL DISK WITH A MAGNETICALLY
WRITABLE TRACK
## FIG. 1

1/4

MAG TRACK FORMAT

| RECORD HEADER | VIDEO FRAME # | DATA |
|---|---|---|

← VARIABLE LENGTH →

SYSTEM LOGIC
## FIG. 2

OPTICAL DISC PLAYBACK SYSTEM FOR VIDEO READ

FIG. 3

ATTACHMENT LOGIC FOR READ/WRITE ON
MAGNETIC TRACK PORTION OF OPTICAL DISK

FIG. 4

PL/1 INSTRUCTION SEQUENCE

```
SELDSP: PROCEDURE OPTIONS (MAIN);

   DCL MAGDATA FILE;

   DCL 1 STRUCTURE,
           2 FRAMERD       BIN FIXED(31),
           2 DATA          VAR CHAR(*);

   DCL FRMDISP             BIN FIXED(31);

   DCL MAX                 BIN FIXED(31);

   FRMDISP = 0;

   MAX = 54000;

   DO WHILE( -EOF);

      READ FILE(MAGDATA) INTO (STRUCTURE);

      FRMDISP = FRMDISP + 1;

      IF FRMDISP >= MAX THEN STOP;


   DO WHILE( FRMDISP > FRAMERD):

      CALL VIDEODISK(ADDR(FRMDISP));

      FRMDISP = FRMDISP + 1;

      IF FRMDISP >= MAX THEN STOP;

      END;

   CALL MAGDISK(ADDR(FRMDISP), DATA);


      END;
 VIDEODISK: PROCEDURE( POINTER);

    END VIDEODISK;

 MAGDISK:  PROCEDURE (POINTER, DATA);

    END MAGDISK;

 END SELDSP;
```

# FIG. 5